Europäisches Patentamt

**European Patent Office**

**Office européen des brevets**

(11) Publication number: **0 034 066**
**A2**

# (12) EUROPEAN PATENT APPLICATION

(21) Application number: **81300541.0**

(22) Date of filing: **10.02.81**

(51) Int. Cl.³: **G 03 B 27/62**, G 03 G 15/052

(30) Priority: **11.02.80 US 120592**

(43) Date of publication of application: **19.08.81**
**Bulletin 81/33**

(84) Designated Contracting States: **DE FR GB IT SE**

(71) Applicant: **SPERRY CORPORATION, 1290, Avenue of the Americas, New York, N.Y. 10019 (US)**

(72) Inventor: **Curley, Joseph Michael, 207 E. Fifth Street, Landsdale, PA. 19446 (US)**

(74) Representative: **Michaels, Peter Albert, SPERRY UNIVAC Patent & Licensing Services M.S. S2 W1 SPERRY UNIVAC CENTRE, London NW10 8LS (GB)**

(54) **Printer with forms overlay.**

(57) A printer with provision for forms overlay avoids the need for mechanical synchronization of the print drum and forms drum.

The print drum (17) carries means (62, 64, 66) for generating a top-of-page signal which initiates printing of a page, and alignment means (68, 70) is provided in association with the forms drum indicating that that drum is in a predetermined position. A circuit (50) controls a motor (18) driving the forms drum (16) so as to cause rotation of the drum to start in response to the top of page signal and to stop in response to the alignment signal.

The motor (18) may be a stepper motor driven by timing signals controlled by a gate (89) enabled by the output of a flip flop (90) which is set by the top of page signal and reset by means (100) providing an adjustable interval after the alignment signal.

The timing signals may be adjustable in frequency, being generated, for example, by causing a clock circuit (82, 83) to repeatedly fill a counter (85, 86, 87), means (88) being provided for initially loading the counter with a preset count.

1

## Printer With Forms Overlay

This invention relates to a printer having provision for forms overlay. The invention will be described with particular reference to laser-xerographic printers, although it is also applicable to printers of other types.

Laser-xerographic printers comprise one type of non-impact printer well known in the art (see U.S. patent 3,659,936 and 3,698,006). They utilize a modulated beam of laser light which is caused to sweep periodically across a photoconducting drum. The information represented by the modulated light is thereby temporarily stored as electrostatic charges on the surface of the drum. In some laser-xerographic printers the electrostatic image is developed with a toner and the toned image is then transferred to paper to form a permanent record.

It is often desirable to print data, such as alphanumeric characters, on a Government, business or graphic form. Rather than purchase expensive preprinted forms, it is possible to print these forms at the same time as the data is printed. An example of one approach for accomplishing the above using a laser printer is disclosed in U.S. patent 3,864,697 at column 4, lines 1-14. Another approach used with laser-xerographic printers having cylindrical photoconducting drums uses a negative of a graphic forms pattern mounted on a hollow, cylindrical rotatable forms drum. A linear light source is mounted within the hollow forms drum. The photoconducting drum and the forms drum are mechanically coupled, so that they rotate together and provide synchronous printing of the graphic forms data and information data. Mechanical interconnections can be made by mounting the forms drum above the printer, for example, with the axis of the forms drum parallel to the axis of the photoconducting drum, and with belt and pulleys connecting the ends of the two drums so that when one drum turns the other also turns. As the forms drum rotates, light transmitted through the graphic forms negative causes a light image of a linear portion of the graphic form pattern to be directed onto that linear portion of the photoconducting drum being swept by the laser at that time. A system of lenses and mirrors directs the light images from the forms drum to the photoconducting drum.

When it is desired to retrofit a graphic forms overlay apparatus, such as the mechanically coupled forms drum described above, to an existing laser-xerographic printer, it is necessary to mount the forms drum in a proper position as described above. For example, the forms drum may be mounted above the printer, and the drive belt coupling the two drums passed through an opening in the top of the printer and round an end of the photoconducting drum.

To ensure proper vertical alignment of the graphic forms image with the information data when printed, an indicator means must be provided on the forms drum. On some overlay devices this includes a pair of protrusions on the forms drum lying along a line parallel to the axis of the drum. Graphics forms negatives are made with two spaced-apart alignment holes which receive the two protrusions on the forms drum on the graphic forms negative when it is placed on the drum. This method of alignment requires that the holes be placed accurately on the graphic forms negative and that the initial rotational position of the forms drum have a predetermined relationship with the initial position of the photoconducting drum. If the holes in the graphic forms master are not properly positioned from one graphic forms master to the next, or, if the rotational relationship of the two drums is disturbed, the form will not be properly aligned with the data.

An alternative known means of providing synchronized rotation between the forms drum and photoconducting drum requires the use of synchronous motors for both drums. The two synchronous motors rotate continuously in phase with one another at the same rate. The synchronous motors may be connected to the drums through gearing in order to compensate for differences in diameter between the two drums. An alignment mark located on the graphic form is detected by a detector once every revolution of the forms drum, and the detector transmits a top-of-forms signal to the printer which starts a page of printing. Hence the graphic forms image is aligned with the data image from the printer on the photoconducting drum. However, the printer must wait for the signal from the forms drum before printing can be initiated. In some laser-xerographic printers the photoconducting drum is fabricated with a seam running along the surface of the drum parallel to the axis of the drum. No imaging of data can take place along the seam or a small region surrounding the seam. With the alignment procedure described above for synchronous motor drives for the photoconducting and forms drums, care must be taken when selecting and mounting a graphic forms negative on the forms drum so that printing is not started which will result in overlaying of the seam.

The invention provides a graphic forms overlay feature which does not require mechanical coupling between, or synchronous motor drives for, the forms drum and the movable light sensitive medium. This allows of easier assembly of the forms overlay apparatus. It also facilitates retro-fitting of the forms overlay system.

The invention also provides automatic alignment of the drums, without interfering with printing by the printer. Any adjustment necessary to accommodate variations in the graphic forms negative may be made by adjusting the parameters of the logic circuitry.

The invention will now be described with reference to the drawings, in which

Figure 1 is a diagrammatic elevation of a portion of a forms overlay apparatus and the printing system in which it is to be used.

Figure 2 is a representation of a forms negative.

Figure 3 is a lamp.

Figure 4 is a schematic diagram of a portion of the graphic forms overlay apparatus and printing system.

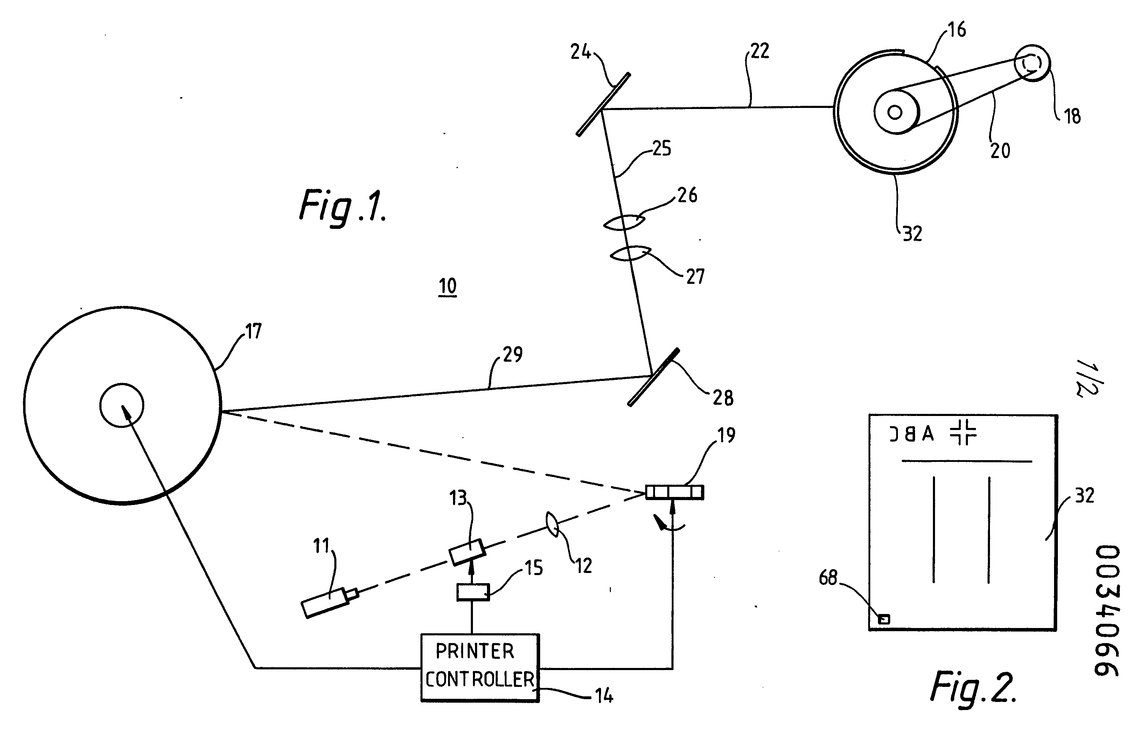

Figure 1 is a diagrammatic eleviation of a graphic forms overlay apparatus designated generally 10, and a laser-xerographic printer. A laser light source 11 transmits a beam of light through an acoustic-optical modulator 13 which, in the preferred embodiment, comprises a slab of glass with a piezo-electric transducer

0034066

attached thereto. Digital signals generated by the character generator within the printer controller 14 and representing information data to be printed modulate an RF generator 15. The RF signals are transmitted to the piezo-electric transducer of modulator 13. When an RF signal is present at the transducer, the path of a portion of a laser beam through the modulator 13 is deflected slightly from the normal path travelled through the slab when no RF signal is present. The beam of light emerges from the modulator 13 and passes through a lens 12 which narrows the cross-section of the beam of light. The beam continues on to a rotating polygonal mirror 19. The planar surfaces of the rotating mirror 19 sweeps the laser beam across a photoconducting drum 17. The beam is switched by the piezo-electric modulator 17, so that when an RF signal is present the laser beam will impinge upon the drum, otherwise it will not.

The photoconducting drum is cylindrical and stores data as a pattern of electrostatic charges on its surface, created in response to illumination by the laser beam. The laser beam moves from left to right along the surface of the drum parallel to its axis. As the drum rotates, the laser beam sweeps out periodic parallel paths on the drum, printing a whole page of data thereon.

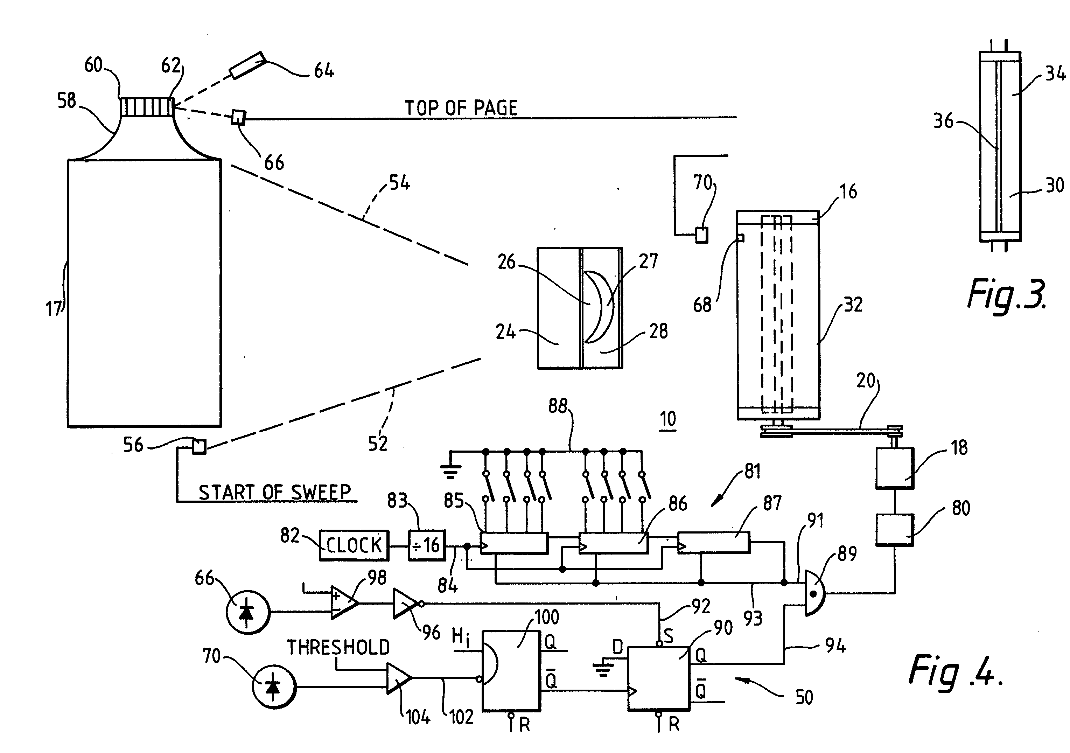

In the preferred embodiment, the overlay apparatus comprises a hollow cylindrical forms drum 16 rotated by a motor 18 coupled to it by a belt and pulley arrangement 20. The surface of the forms drum 16 is transparent, and a light source such as a cylindrical fluorescent light element 30 in Figure 3 is mounted inside its drum 1. The fluorescent tube 30 does not rotate with the drum 16. A negative of a graphic form, such as the negative 32 in Figure 2, is shown mounted on the surface of the forms drum 16 in Figure 1.

Figure 2 is a representation of a negative. In an actual negative, the region surrounding both the transparent portion 68 and the forms pattern to be printed is opaque while the transparent portion 68 and forms pattern are transparent.

Referring to Figure 3, the surface of the fluorescent tube 30 is opaque except for a linear portion 36, which illuminates a strip of the negative of the graphic form 32 as the forms drum rotates. Light from this strip travels along the path 22 in Figure 1 and is first reflected from a mirror 24 along the path 25 through lenses 26 and 27 to the mirror 28. The mirror, which is parallel to the mirror 24 reflects the light along the path 29 to the photoconducting drum 17. The arrangement of the drums 17 and 16 and the optical components comprising the mirrors 24 and 28 and the lenses 26 and 27 is such that the linear image produced on the photoconducting drum 17 coincides with the linear sweep of the laser beam. In the preferred embodiment, the cross section of the linear beam of light is approximately one half inch (12mm) high as it impinges on the drum 17.

A fluorescent tube with a totally transparent surface may also be used. However, the light transmitted will be spread over the entire negative, lessening the concentration of light captured by the optical arrangement for reflection on to the photoconducting drum 17.

Figure 4 is a schematic diagram of the graphic forms overlay apparatus 10 including the logic circuitry means designated generally 50. When the laser beam sweeps across the photoconducting drum 17 it sweeps from the dashed line 52 to the dashed line 54. Each sweep of the laser beam first impinges on the photodetector 56 to the left of the photoconducting drum 17, and this provides a periodic start-of-sweep signal.

A drive casting 58 at one end of the drum 17, 58 ends in a light reflecting end portion 60 with a darkened section 62. Light from a light source 64 is reflected from the end portion 60 and is detected by a photodetector 66. The darkened section 62 is positioned so that the interruption of the signal from the photodetector 60 indicates the top of the next page of data to be printed by the printer. If more than one page of data is to be imaged on the photoconducting drum, then a corresponding number of darkened sections 62 are positioned on the end portion 60 to provide top-of-page signals.

Referring now to Figure 2 and 4, the negative 32 includes a small transparent portion 68 which, in one position of the forms drum, allows light to strike a photodetector 70, providing an alignment signal for automatic alignment of the initial position of the forms drum 16 with the top-of-page position of the photoconducting drum 17.

The transparent portion must be in a left or right margin of the negative, i.e., outside the area of the negative where the graphics forms pattern is located, with the photodetector 70 correspondingly positioned, so that light transmitted through the forms pattern does not illuminate the photodetector, causing a false alignment signal to be generated.

To ensure that the proper image of the graphic forms negative 30 is correctly aligned with the data image on the photoconducting drum 17 the forms drum must be started in time with the top of page signals generated by rotation of the photoconducting drum 17. Rotation of the photoconducting drum 17 is free running and imaging of a page of data on the photoconducting drum is initiated by a top of page signal. Rotation of the forms drum 16 is aligned with the top of page signals by operation of the logic circuitry means 50 in cooperation with the top of page and alignment signals.

The drive motor 18 is preferably a stepping motor, for example Superior Electric Motor, model MO61-F002, which makes a complete revolution in 200 steps or equivalently provides 1.8 degrees of rotation per step. The drive signals for the motor may be generated by a motor interface board 80 Model No. STM 103 also made by Superior Electric. Designed to receive TTL-like digital input signals, the board provides a drive current which advances in phase each time an input signal is received. Continuous changes in drive current phase cause the motor to rotate in response to the above-mentioned input signals.

Periodic digital signals are provided by clock-counter circuitry designated generally 81 of the logic circuitry means 50. The output of a crystal controlled master clock 82 is first divided by sixteen by a counter 83, which may be a type 74161 TTL device. This provides periodic basic clocking signals over line 84 for driving the remaining counter circuitry comprising type 74161 counters 85, 86 and 87. The counters 85 and 86 can be loaded externally with any of a range of pre-set counts by means of switching means 88. In the preferred embodiment, a fixed pre-set count is loaded into counter 87. By adjusting the pre-set count loaded into counters 85 and 86, the separation between digital signals transmitted from the clock-counter circuitry 81 to the interface board 80 via the AND gate 89 can be varied, thereby changing the rate at which the motor 18 turns the drum 16. Hence, the clock-counter circuitry 81 provides a means for compensating for variations in the diameter of the forms drum 16 or in the length of the negative 32, which variations would affect proper rotational synchronism between the drums 16 and 17.

After a count of M basic clock signals by the counters 85, 86 and 87, a signal is transmitted to the AND gate 89 over the line 91 and is also fed back over the line 93 to load the counters 85, 86 and 87 with their respective pre-set counts, so that counting can begin again.

It is not necessary that the periodic digital signals to AND gate 89 should be generated by clock counter circuitry 81. Alternatively, periodic start-of-sweep signals from the photodetector 56 can be connected directly to the AND gate 89 to serve as the digital signals for the interface board 80. Other periodic signals or derivations thereof related to the sweeping rate of the laser of the photoconducting drum could also be utilized to provide digital signals to the AND gate 89. However, in the preferred embodiment, the clock-counter circuitry 81 is utilized to provide an adjustment means for compensating for variations in forms drum diameter and errors in negative fabrication, etc.

Rotation of the stepping motor 83 begins when a top-of-page signal from the photodetector 66 sets the D flip flop 90 over the line 92. The output of the D flip flop 90 is connected to the AND gate 89 via the line 94. A high signal to the AND gate 89 from the flip flop 90 gates the digital signals on the line 91 to the stepping motor 18. The output of flip flop 90 will be set to the high state when the set input S over the line 92 is low. The current from the photodetector 66 stops when its darkened section 62 interrupts the reflected light from the end portion 60. The output from the photodetector 66 is transmitted to the negative side of a differential amplifier 98, which is an LM 3900 device. When the current to the negative side stops, then differential amplifier 98 provides a high signal output. This high signal is inverted by an inverter 96 to provide a low signal over the line 92 which sets the flip flop 90. Then, periodic drive signals can pass through the AND gate 89 to the motor 18 via the interface board 80 as long as the output on line 94 is high.

When the photodetector 70 is activated by light from the aperture 68 in the graphic forms negative, the amplifier 104 supplies a signal to the single shot multi-vibrator 100, which is a 74LS221 TTL device. A low signal output pulse from the multivibrator 100 provides a delayed clocking input to a D flip flop 90. The D flip flop 90 has a low signal on the D line and this is transferred to the output of the flip flop 90 on the positive going or trailing edge of the low multi-vibrator output pulse. This low signal on the line 94 blocks its AND gate 89 from passing drive signals to the stepping motor 18.

In a well-known manner, the output pulse width of the multi-vibrator 100 can be varied externally with suitable selection of resistance and capacitance connected to selected pin connections of the multi-vibrator 100. This in turn varies the time at which the trailing edge of the multi-vibrator output pulse is inputted to the D flip flop 90. Hence, the time interval between the arrival of the signal from its photodetector 70 to the multi-vibrator 100 and the transmitting of a low signal from the D flip flop 90 on the line 94 can be varied. This allows the forms drum 16 to rotate several more steps to bring it into the correct position for the start of the next page.

Preferably, two pages of data are imaged on the photoconducting drum 17 for each revolution of the drum 17, while the forms drum 16 rotates one revolution for each page imaged on the drum 17. In general, the circumference of the forms drum 16 is less than the distance from the top of one page of data to the top of the next page of data on the photoconducting drum 17. Through the alignment means and logic circuitry described above, the rotation of the forms drum 16 can be stopped in the initial position after a full rotation and then started again with the next top of page signal. It is desirable to stop rotation of the forms drum on an opaque portion of the negative after transmission of the alignment signal in order to prevent constant illumination of the photoconducting drum 17.

Adjustment of the parameters of multi-vibrator 100 provides a means for correcting an error in locating the transparent portion 68 on the negative.

PAM/MOB.

Claims

1.   A printer in which a modulated light beam is caused to sweep the surface of a rotating photoconductive drum (17), the printer also including a forms drum carrying a forms overlay (32) and being rotated by a motor (18) and having synchronizing means (50) for synchronizing the rotation of the drums, characterised in that alignment means (68,70) generates an alignment signal indicating that the forms drum (16) is in a predetermined initial position, means (62,64,66) coupled to the photoconductive drum (17) generates a top-of-page signal which initiates printing of a page, and the synchronizing means includes a logic circuit (50) responding to the top of page signal to start rotation of the forms drum (16), and to the alignment signal to stop rotation of the forms drum.

2.   A printer according to claim 1, further characterised in that the alignment signal is generated by a photodetector (70) in co-operation with a transparent area (68) in the generally opaque marginal area of the forms overlay (32).

3.   A printer according to claim 1 or claim 2, further characterised in that the forms drum (16) is rotated by a stepper motor (18) driven by timing signals controlled by a gating circuit comprising an AND gate (89) enabled by the output of a flip flop (90) which is set by the top-of-page signal and reset by means (100) at an adjustable interval after the alignment signal.

4.   A printer according to any preceding claim, further characterised in that the timing signal comprises pulses generated by clocking circuits (82,83) repeatedly filling a counter (85,86,87), with means (88) for presetting the contents of the counter, thereby enabling the speed of rotation of the forms drum to be adjusted.

0034066

Fig.1.

Fig.2.

PRINTER CONTROLLER

TOP OF PAGE

START OF SWEEP

CLOCK

÷16

THRESHOLD

Fig.3.

Fig.4.

2/2

0034066